# EUROPEAN PATENT APPLICATION

(11) **EP 4 831 764 A1**
(43) Date of publication of application: **28.10.2026**
(21) Application number: 24907241.4
(22) Date of filing: 10.12.2024
(51) Int. Cl.: G05D 1/242, G05D 1/43

(54) **MOVING BODY AND MOVING BODY CONTROL SYSTEM**

(30) Priority: 21.12.2023 JP 2023215453
(71) Applicant: KYOCERA Document Solutions Inc., Osaka-shi, Osaka 540-8585 (JP)
(72) Inventor: KONISHI Hidehisa, Osaka-shi, Osaka 540-8585 (JP); MASAKI Eijiro, Osaka-shi, Osaka 540-8585 (JP); MIYAGAWA Seiji, Osaka-shi, Osaka 540-8585 (JP)
(74) Representative: Winter, Brandl - Partnerschaft mbB
(86) International application number: PCT/JP2024/043514
(87) International publication number: WO 2025/134856

(57) **Abstract**

A mobile body 1 includes a driving device 51 that generates a driving force for running; a scanner 12a or 12b that optically scans a floor surface and generates a partial floor surface image; and a controller 54 that controls the driving device 51 in order to reduce an error between a current position of this mobile body 1 detected on the basis of the partial floor surface image and a predetermined route such that this mobile body 1 runs on the route. The controller 54 causes the scanner 12a or 12b to intermittently generate the partial floor surface image with a predetermined interval.

## Description

### Technical Field

The present invention relates to a mobile body and a mobile body control system.

### Background Art

A mobile device includes movement means for moving this device along a surface of a structure, imaging means installed on a bottom surface of this device, for imaging the surface of the structure, and determining means for comparing image data output from the imaging means with reference data that has been registered of each position and thereby determining a position of this device (see PATENT LITERATURE #1, for example).

### Citation list

### Patent literature

PATENT LITERATURE #1: Japan Patent Application Publication No. 2019-185465.

### Summary of invention

However, if floor surfaces are continuously imaged and partial floor surface images are generated, a data amount of a data process and data transmission for the partial floor surface images increases, a high performance system is required to be installed in a mobile body, and consequently, a cost of the mobile body becomes high.

The present invention has been conceived in view of the aforementioned problem, and it is an object of the present invention to obtain a relatively-low-cost mobile body and a mobile body control system that controls such a mobile body.

A mobile body according to the present invention includes a driving device that generates a driving force for running; a scanner that optically scans a floor surface and generates a partial floor surface image; and a controller that controls the driving device in order to reduce an error between a current position of this mobile body detected on the basis of the partial floor surface image and a predetermined route such that this mobile body runs on the route. Further, the controller causes the scanner to intermittently generate the partial floor surface image with a predetermined interval.

A mobile body control system according to the present invention includes plural mobile bodies that run along routes in a predetermined area of a floor surface; and a management server. The plural mobile bodies (a) scan floor surface parts at current positions of the mobile bodies and thereby generate partial floor surface images, respectively, and (b) transmit the partial floor surface images to the management server. The management server includes a communication device that receives the partial floor surface images from the plural mobile bodies, a mobile body position determining unit that determines the current positions of the mobile bodies on the basis of the partial floor surface images, and a mobile body control unit that controls operations of the mobile bodies on the basis of the determined current positions of the mobile bodies for the mobile bodies, respectively. Further, the plural mobile bodies intermittently generate the partial floor surface images with predetermined intervals, respectively; and the mobile body control unit sets the intervals to the mobile bodies.

### Advantageous effect of invention

By means of the present invention, obtained are a relatively-low-cost mobile body and a mobile body control system that controls such a mobile body.

These and other objects, features and advantages of the present invention will become more apparent upon reading of the following detailed description along with the accompanying drawings.

### Brief description of drawings

[Fig. 1] Fig. 1 shows a diagram that indicates a configuration of a mobile body control system according to an embodiment of the present invention.
[Fig. 2] Fig. 2 shows a diagram that explains a floor surface on which a mobile body 1 in Fig. 1 runs.
[Fig. 3] Fig. 3 shows a perspective-view diagram that indicates a mechanical configuration of the mobile body 1 in Fig. 1.
[Fig. 4] Fig. 4 shows a diagram that indicates an example of a scanner 12a in the mobile body 1 shown in Fig. 3.
[Fig. 5] Fig. 5 shows a diagram that indicates another example of a scanner 12a in the mobile body 1 shown in Fig. 3.
[Fig. 6] Fig. 6 shows a block diagram that indicates an electronic configuration of the mobile body 1 in Fig. 1.
[Fig. 7] Fig. 7 shows a diagram that explains an intermittent imaging operation of the mobile body 1 in Fig. 1.
[Fig. 8] Fig. 8 shows a block diagram that indicates a configuration of a management server 2 in Fig. 1.
[Fig. 9] Fig. 9 shows a flowchart that explains a behavior of the management server 2 in Fig. 1.

### Description of embodiments

Hereinafter, embodiments according to aspects of the present invention will be explained with reference to a drawing.

### Embodiment 1.

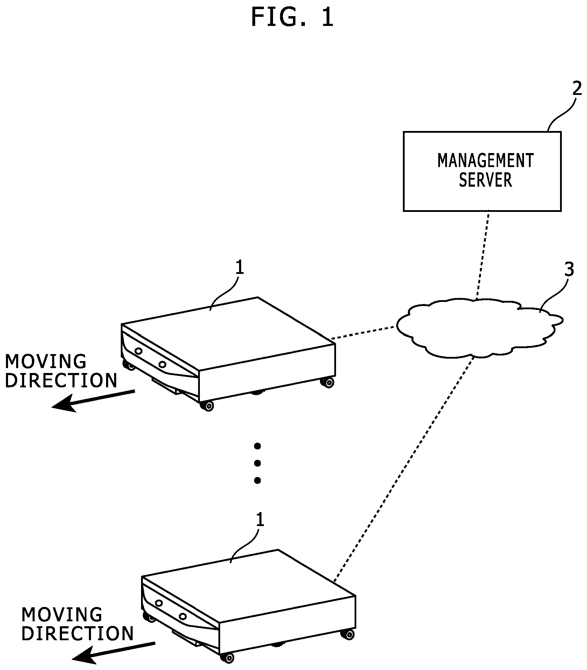

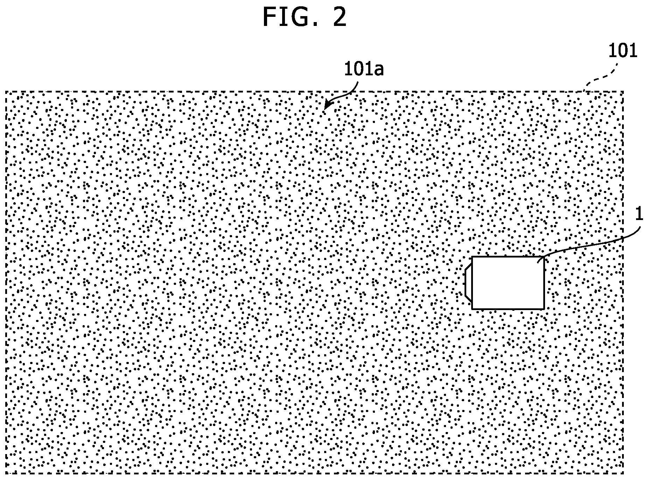

Fig. 1 shows a diagram that indicates a configuration of a mobile body control system according to an embodiment of the present invention. Fig. 2 shows a diagram that explains a floor surface on which a mobile body 1 in Fig. 1 runs. As shown in Fig. 1, this mobile body control system includes plural mobile bodies 1 that run along respective routes in a predetermined area of a floor surface, and a management server 2.

Each of the mobile bodies 1 is a self-running mobile body, an AGV (Automatic Guided Vehicle), an AMR (Autonomous Mobile Robot), or the like. The mobile body 1 runs and moves along a predetermined route on a floor surface 101 of a predetermined area while optically scanning the floor surface 101 at a current position of this mobile body 1. In this mobile body control system, a marker or the like physically arranged as a route on the floor surface 101 is not required, and the management server 2 sets the route as data, searches for a part that agrees with a partial floor surface image at the current position of the mobile body 1 in a floor surface image of the predetermined area of the floor surface 101, determines an actual current position of the mobile body 1 on the basis of the position at which the part agrees with it, and controls an operation of the mobile body 1 correspondingly to the set route and this current position.

Here, the floor surface 101 is a floor surface of a factory or warehouse, for example, and has not only an original pattern 101a (i.e. surface pattern of floor material such as tile or concrete) but a scratch, a stain or the like, and therefore, in the high resolution surface image, image patterns at different positions are different. Therefore, for example, a current position of the mobile body 1 is uniquely determined using pattern matching, image search with machine learning or the like.

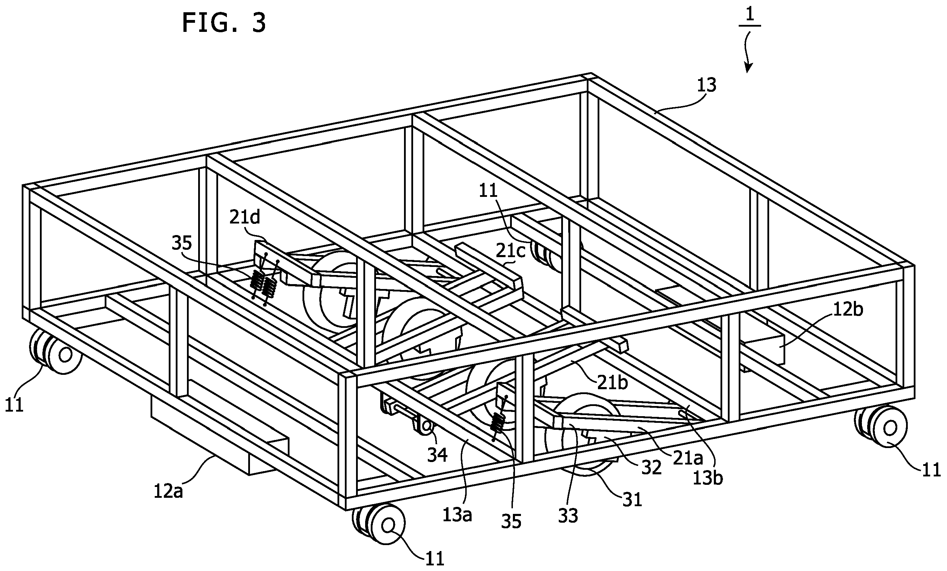

Fig. 3 shows a perspective-view diagram that indicates a mechanical configuration of the mobile body 1 in Fig. 1. As shown in Fig. 3, this mobile body 1 includes four casters 11 arranged at four corners of its bottom surface, scanners 12a, 12b, and a frame body 13 to which the casters 11 and the scanners 12a, 12b are fixed.

The caster 11 includes a driven wheel that contacts with a floor surface, and is fixed to the frame body 13 so as to be rotatable in a horizontal direction.

The scanner 12a optically scans a part of a floor surface 101 and thereby generates a partial floor surface image (first partial floor surface image). The scanner 12a is arranged in a front end part of this mobile body 1 in its moving direction. The scanner 12b optically scans a part of a floor surface 101 and thereby generates a partial floor surface image (second partial floor surface image). The scanner 12b is arranged in a rear end part of this mobile body 1 in its moving direction. Each of the scanners 12a, 12b (a) is arranged on a bottom surface side of this mobile body 1 facing the floor surface, and (b) repeatedly generates as a partial floor surface image a line image with a predetermined width perpendicular to a moving direction of this mobile body 1. The scanners 12a, 12b scan the floor surface with a predetermined high resolution (e.g. 600 dpi).

The frame body 13 is a body with a frame structure.

Further, this mobile body 1 includes driving wheel units 21a, 21b, 21c, 21d. Each of the driving wheel units 21a, 21b, 21c, 21d includes a driving wheel 31 that contacts with the floor surface, a supporting unit 32 that supports the driving wheel 31 so as to be rotatable, a wheel frame unit 33 fixed to the supporting unit 32, a rotatable supporting unit 34 that fixes an end of the wheel frame unit 33 to the frame body 13 (one of beams 13a, 13b) so as to be rotatable, and a spring member 35 that provides a force to the other end of the wheel frame unit 33 toward the frame body 13 (the other of the beams 13a, 13b). Consequently, by a restoring force of the spring member 35, the driving wheel 31 is pushed to the floor surface with a predetermined pressure.

Further, each of the driving wheel units 21a, 21b, 21c, 21d includes a driving device (not shown) that generates and transmits a driving force for running to the driving wheel 31. The driving devices are individually arranged to the driving wheel units 21a, 21b, 21c, 21d, respectively, and individually generate and transmit driving forces to the driving wheels 31. Here, the driving device generates the driving force using a motor, and transmits the driving force to the driving wheel 31 using a gear or the like. For example, the driving wheel 31 includes a driving shaft that connects to the driving device, a rigid wheel fixed to the driving shaft, and an elastic tire fitted around outside of the wheel.

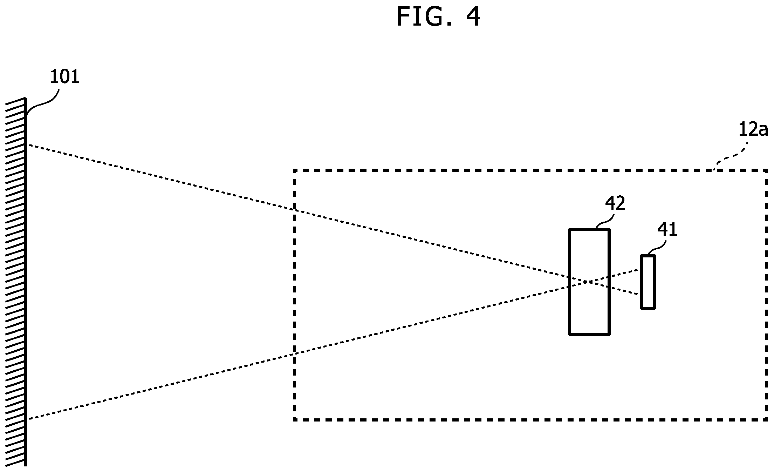

Fig. 4 shows a diagram that indicates an example of a scanner 12a in the mobile body 1 shown in Fig. 3. As shown in Fig. 4, for example, each of the scanners 12a, 12b includes a light emitting unit (not shown) that emits light to the floor surface, an image sensor 41, a shrinking optical system 42 (single or plural lenses) that converges to the image sensor 41 reflection light obtained by reflection of light from the light emitting unit on the floor surface.

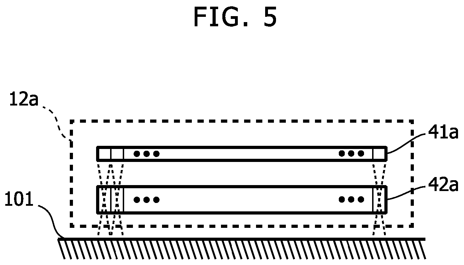

Fig. 5 shows a diagram that indicates another example of a scanner 12a in the mobile body 1 shown in Fig. 3. Further, as shown in Fig. 5, for example, the scanner 12a or 12b may include a contact image sensor. In such a case, the scanner 12a or 12 is a scanner of an equal magnification optical system that includes a line sensor 41a that includes plural photodetector elements, and a lens array 42a.

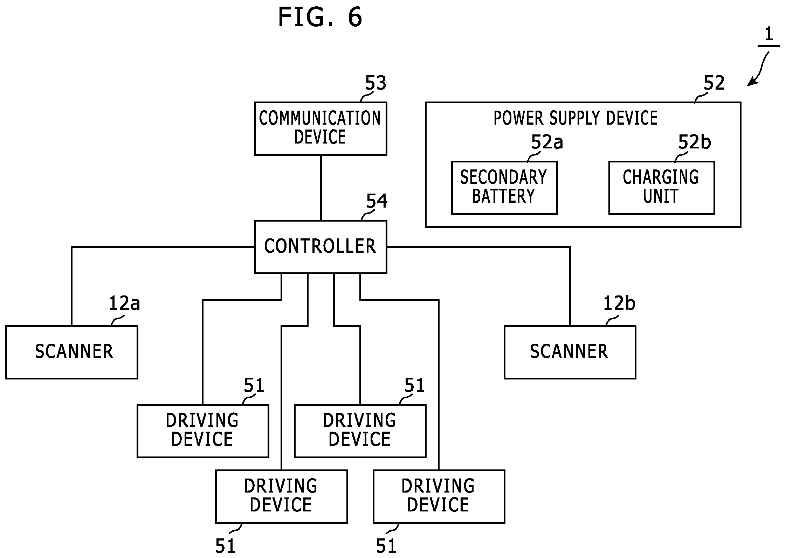

Fig. 6 shows a block diagram that indicates an electronic configuration of the mobile body 1 in Fig. 1. As shown in Fig. 6, the mobile body 1 includes not only the aforementioned driving devices 51 but a power supply device 52, a communication device 53, and a controller 54.

The power supply device 52 includes a secondary battery 52a, and a charging unit 52b for the secondary battery 52a; and supplies electric power to the driving devices 51, the communication device 53, and the controller 54. When this mobile body 1 is arranged at a charging pod (not shown) connected to commercial power supply, the charging unit 52b receives electric power from the charging pod in a contact manner or a contactless manner, and charges the secondary battery 52b with the received electric power..

The communication device 53 performs data communication with an external device (server or the like) with wireless communication in accordance with a predetermined protocol.

The controller 54 includes a computer and/or an ASIC (Application Specific Integrated Circuit), and performs a data process, control of the driving devices 51, control of the communication device 53, and the like using the computer (software processing) and/or the ASIC (hardware processing).

In accordance with a request from the controller 54, the communication device 53 (a) transmits the partial floor surface image to the management server 2, and receives either the error between the current position of this mobile body 1 and the route or a control amount corresponding to the error, that is detected by the management server 2 on the basis of the partial floor surface image. Further, the controller 54 controls the driving devices 51 such that this mobile body 1 runs on the aforementioned route on the basis of the error or the control amount (control amount for each driving device 51) or controls the driving devices 51 to stop the mobile body 1.

The partial floor surface image is a band image that consists of line images of a predetermined number of lines. The scanners 12a, 12b repeatedly generate line images with a predetermined width perpendicular to a moving direction of this mobile body 1, respectively, and an image conversion unit (not shown) buffers the line images and sets line images of a predetermined number of lines as the partial floor surface images. This image conversion unit may be included by the mobile body 1 (the controller 54) or may be included by the management server 2.

Further, as the partial floor surface image, one of the first partial floor surface image and the second partial floor surface image may be used, or the current position may be derived from each of the first partial floor surface image and the second partial floor surface image as well.

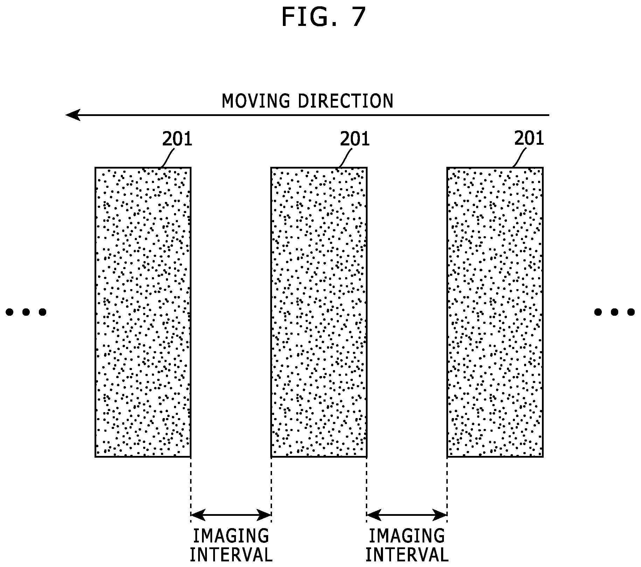

Fig. 7 shows a diagram that explains an intermittent imaging operation of the mobile body 1 in Fig. 1. As shown in Fig. 7 for example, the controller 54 causes the scanners 12a, 12b to repeatedly and intermittently generate partial floor surface images 201 with a predetermined imaging interval (time or distance), and the communication device 53 immediately transmits the intermittently-generated partial floor surface images to the management server 2.

This imaging interval may be fixed or may be variable. For example, the imaging interval is derived by adding or subtracting a correction amount to a default imaging interval (e.g. a same length as a imaging length of one partial floor surface image).

For example, the imaging interval is adjusted correspondingly to a speed of the mobile body 1. Specifically, the imaging interval (time) is adjusted to be longer for a lower speed of the mobile body 1.

Further, for example, the imaging interval is adjusted correspondingly to a turning angle of the mobile body 1. Specifically, the imaging interval (time) is adjusted to be shorter for a larger turning angle (angle change of the moving direction when the mobile body 1 turns) of the mobile body 1.

Furthermore, (data of) the partial floor surface image may be transmitted to the management server 2 after data compression in the mobile body 1, and may be decompressed in the management server 2.

If a rotation speed of the driving wheels 31 of the driving wheel units 21a, 21b and a rotation speed of the driving wheels 31 of the driving wheel units 21c, 21d are set to be equal to each other, then the mobile body 1 runs straight; and if a rotation speed of the driving wheels 31 of the driving wheel units 21a, 21b and a rotation speed of the driving wheels 31 of the driving wheel units 21c, 21d are set to be different from each other, then the mobile body 1 turns. Therefore, so as to reduce the aforementioned error, the driving device 51 of each of the driving wheel units 21a, 21b, 21c, 21d is controlled.

Further, a slope of the moving direction from the route may be derived on the basis of both of the error obtained from the first partial floor surface image and the error obtained from the second partial floor surface image.

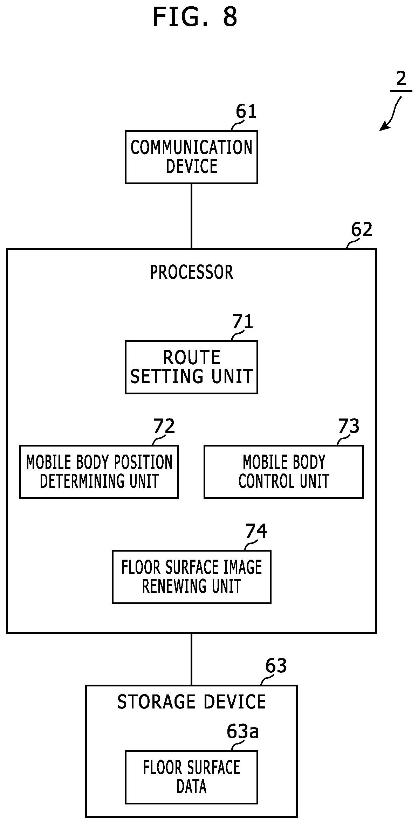

Fig. 8 shows a block diagram that indicates a configuration of a management server 2 in Fig. 1.

The management server 1 in Fig. 1 includes a communication device 61, a processor 62, and a storage device 63.

The communication device 61 performs data communication with the mobile body 1 through a predetermined communication path 3 (wireless communication path and/or wired communication path). For example, the communication device 61 is a wireless network interface, a data communication interface for a mobile telephone network, a near field wireless communication interface, or the like. Further, the communication path 3 may include a wireless station, the communication device 61 may connect to the wireless station through a wired communication path and the mobile body 1 may connect to the wireless station through a wireless communication path, and thereby the communication device 61 may be enabled to perform data communication with the mobile body 1.

The communication device 61 performs data communication with the plural mobile bodies 1 and receives the aforementioned transmission data from the plural mobile bodies 1.

The processor 62 is a computer that includes a CPU (Central Processing Unit), a ROM (Read Only Memory), a RAM (Random Access Memory) and the like, loads a program from the ROM or the storage device 63 to the RAM, and executes the program with the CPU and thereby acts as various processing units. Here, the processor 62 acts as a route setting unit 71, a mobile body position determining unit 72, a mobile body control unit 73, and a floor surface image renewing unit 74.

The storage device 63 is a non volatile storage device and stores data and a program. Here, in the storage device 63, floor surface data 63a has been stored.

The floor surface data 63a include image data of a floor surface image of a whole floor surface of the aforementioned predetermined area, and position data that indicates a relationship between a position in the floor surface image (pixel position) and an actual position on the floor surface. Using this image data, a position of the partial floor surface image in the floor surface image (i.e. a position of a part that is most similar to the floor surface image in the floor surface image) is determined; and using this position data, the position of the partial floor surface image in the floor surface image is converted to an actual position on the floor surface.

The route setting unit 71 sets as route data a route of the mobile body 1 in a predetermined area of the floor surface 101. For example, the route consists of one or plural links, and the route data includes coordinate values of a beginning point and an end position of each link. For example, the route setting unit 71 may connect to a Manufacturing Execution System (MES) and may set a route of the mobile body 1 in accordance with an operation (transportation of parts, or the like) of the mobile body 1 requested by the MES.

The mobile body position determining unit 72 determines a current position of the mobile body 1 that runs along a route in a predetermined area of the floor surface 101. Specifically, the mobile body position determining unit 72 (a) acquires a partial floor surface image specified by the aforementioned transmission data received from each of the running mobile bodies 1, (b) determines a position of the partial floor surface image in a floor image of the aforementioned whole predetermined area, and (c) on the basis of the determined position, determines the current position (actual position on the floor surface 101) of the mobile body 1. Here, the partial floor surface image is generated by scanning a part of the floor surface 101 facing a bottom surface of the mobile body 1 using the scanner 12a or 12b arranged on the bottom surface side of the mobile body 1. The current position of the mobile body 1 is expressed as a physical distance from a predetermined reference position on the floor surface 101, for example. Further, a position of the partial floor surface image in the floor surface image of the whole predetermined area is expressed as a pixel position or the like in the floor surface image of the whole predetermined area, and a relationship is known between a current position of the mobile body 1 and a position of the partial floor surface image.

Further, the mobile body position determining unit 72 uses the communication device 61 and thereby acquires the partial floor surface image. The floor surface image and the partial floor surface image may be color image data generated by the color scanners 12a, 12b or may be grayscale image data generated by the monochrome scanners 12a, 12b.

Further, the mobile body position determining unit 72 determines a position of the partial floor surface image in the floor surface image of the aforementioned whole predetermined area using pattern matching or image search with machine learning, for example. At that time, even if a part of the floor surface image of the aforementioned whole predetermined floor surface and the partial floor surface image does not completely agree with each other, a position with a highest accuracy in the floor surface image of the whole predetermined floor surface is determined as a position of the partial floor surface image.

The mobile body control unit 73 controls an operation of each of the mobile bodies 1 on the basis of the determined current position of the mobile body 1. The mobile body control unit 73 uses the communication device 61 and thereby transmits to the mobile body 1 an operation instruction based on the determined current position of the mobile body 1, and thereby controls a behavior of the mobile body 1.

Specifically, the mobile body control unit 73 (a) determines an error between a route set by the route setting unit 71 and the current position of the mobile body 1, and causes the mobile body 1 to run so as to reduce the error (for example, causes the mobile body 1 to turn correspondingly to the error), and (b) if the determined current position is a stop position, stops the mobile body 1.

The floor surface image renewing unit 74 renews with the acquired partial floor surface image a part at the partial floor surface image was determined in the floor surface image of the aforementioned whole predetermined area. Consequently, even if a change (aging change, attachment of stain or the like) of the floor surface 101 occurs, a part that the mobile body 1 passes in the floor surface image of the whole predetermined area is renewed with a latest floor image, and therefore, a detection error at a current position in the mobile body position determining unit 72 is restrained.

Further, the mobile body control unit 73 transmits an imaging interval with an operation instruction to each of the mobile bodies 1 and thereby sets the aforementioned imaging interval to the mobile body 1.

At that time, the mobile body control unit 73 sets the imaging intervals and generating timings of the partial floor surface images to the mobile bodies 1, respectively, such that the generating timings of the partial floor surface images become even among the plural mobile bodies 1 (i.e. such that the number of the mobile bodies 1 of which the generating timings of the partial floor surface images are included in a predetermined unit time is substantially constant).

Further, the mobile body control unit may set to the mobile body 1 the imaging interval corresponding to a current position of this mobile body 1. In such a case, for each position of the floor surface in the floor surface data 63a, the imaging interval (time or distance) corresponding to the position is set in advance, and the mobile body control unit 73 refers to the floor surface data 63a and thereby determines the imaging interval corresponding to a current position of the mobile body 1 and sets the imaging interval to this mobile body 1.

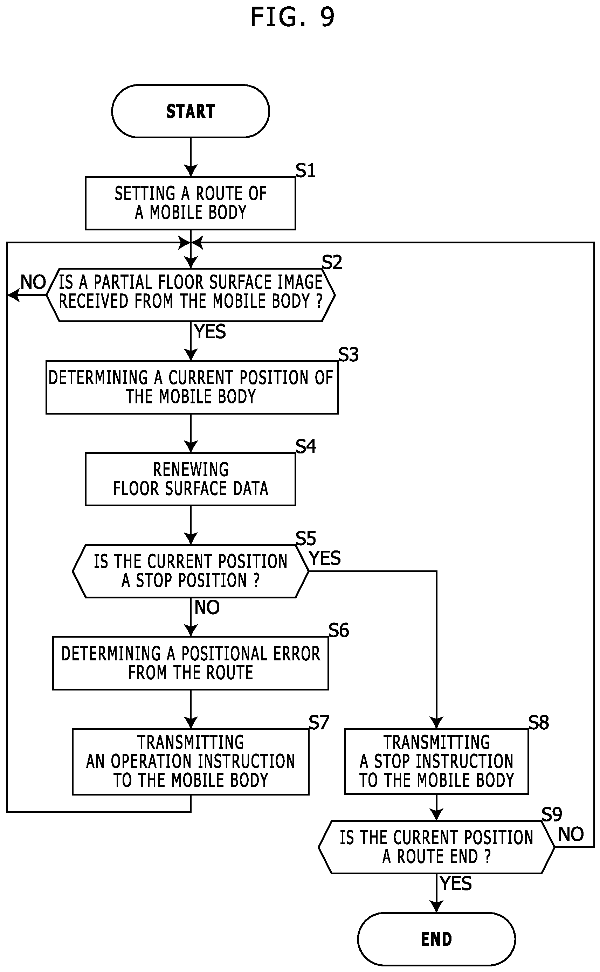

In the following part, a behavior of the aforementioned mobile body control system is explained. Fig. 9 shows a flowchart that explains a behavior of the management server 2 in Fig. 1.

The route setting unit 71 of the management server 2 sets a route of the mobile body 1 in accordance with a user operation or the like (Step S1). For example, route data that indicates the route has been stored in the storage device 63, and the route setting unit 71 reads the route data and sets the route of the mobile body 1.

Afterward, the mobile body control unit 73 transmits to the mobile body 1 an operation instruction to start running the mobile body 1, using the communication device 61. In the mobile body 1, the controller 54 receives the operation instruction using the communication device 53, and controls the driving devices 51 and thereby starts running the mobile body 1. At that time, the mobile body 1 performs imaging of partial floor surface images with a default imaging interval.

In the management server 2, when receiving the line images and the partial floor surface image (Step S2), the mobile body position determining unit 72 searches for the partial floor surface image in the whole floor surface image using pattern matching or the like, determines a position of the partial floor surface image in the whole floor surface image, and determines an actual current position of the mobile body 1 corresponding to the position of the partial floor surface image (Step S3). If the line images are received, the line images of a predetermined number of lines are buffered and used as the partial floor surface image. Upon determining a position of the partial floor surface image in the whole floor surface image, the floor surface image renewing unit 74 renews a corresponding part in the whole floor surface image with the received partial floor surface image in the floor surface data 63a.

Subsequently, the mobile body control unit 73 determines whether the determined current position is a stop position or not (Step S5). If the determined current position is not a stop position, the mobile body control unit 73 determines an error between the aforementioned route and the current position of the mobile body 1 (Step S6), and transmits as an operation instruction to the mobile body 1 either an error amount of the error or a corresponding control amount for the mobile body 1 so as to reduce the error (Step S7). Further, at that time, the mobile body control unit 73 transmits the imaging interval to the mobile body 1. Afterward, returning to Step S2, for next partial floor surface images, the processes in and after Step S3 are performed. If the error does not appear, without transmitting an operation instruction, the mobile body 1 is caused to maintain running with a current direction and current speed.

Each of the mobile bodies 1 (a) receives the operation instruction and the imaging interval and upon receiving them, controls the driving device 51 in accordance with the operation instruction and thereby adjusts running of the mobile body 1 (e.g. causes the mobile body 1 to turn right or left to be close to the route), and (b) while running, causes the scanner 12a or 12b to operate with the imaging interval and thereby repeatedly and intermittently acquires partial imaging images and transmits them to the management server 2 using the communication device 53. If a new imaging interval is received from the management server 2, the imaging interval is renewed with the received imaging interval.

Meanwhile, if the determined current position is a stop position, the mobile body control unit 73 transmits a stop instruction tot he mobile body 1 using the communication device 61 (Step S8). Subsequently, the mobile body control unit 73 determines whether the determined current position (or this stop position) is an end of the route or not (Step S9), and if the determined current position (or this stop position) is an end of the route, then terminates running of the mobile body 1 on this route.

Meanwhile, if the determined current position (or this stop position) is not an end of the route, then when a predetermined condition (finishing a predetermined operation by the mobile body 1 at this position , receiving a running restart instruction from the management server 2, or the like) is satisfied, the mobile body 1 restarts running on the route. Afterward, returning to Step S2, for next partial floor surface images, the processes in and after Step S3 are performed.

As mentioned, in the aforementioned Embodiment 1, the mobile body 1 includes the driving device 51 that generates a driving force for running; the scanner 12a or 12b that optically scans a floor surface and generates a partial floor surface image; and the controller 54 that controls the driving device 51 in order to reduce an error between a current position of this mobile body 1 detected on the basis of the partial floor surface image and a predetermined route such that this mobile body 1 runs on the route. The controller 54 causes the scanner 12a or 12b to intermittently generate the partial floor surface image with a predetermined interval.

Consequently, a data amount of a data process and data transmission for the partial floor surface images decreases, a processing speed of a system installed in the mobile body can be relatively low, and therefore, a cost of the mobile body becomes relatively low.

### Embodiment 2.

In Embodiment 2, the management server 2 is not installed, and the mobile body 1 includes the storage device 63 (the floor surface data 63a), the route setting unit 71, the mobile body position determining unit 72, the mobile body control unit 73, and the floor surface image renewing unit 74. Thus, without using the aforementioned management server 2, the mobile body 1 maintains the floor surface image of the whole floor surface 101 (i.e. a movement area of the mobile body 1), and determines a position of the partial floor surface image in the floor surface image, determines an actual current position corresponding to this position, and autonomously controls running and stopping as well.

Other parts of the configuration and behaviors of the mobile body 1 according to Embodiment 2 are identical or similar to those in Embodiment 1, and therefore not explained here.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned embodiment, the scanner 12b may not be installed.

### Industrial applicability

For example, the present invention is applicable to an AGV or the like.

## Claims

1. A mobile body, comprising:
a driving device that generates a driving force for running;
a scanner that optically scans a floor surface and generates a partial floor surface image; and
a controller that controls the driving device in order to reduce an error between a current position of this mobile body detected on the basis of the partial floor surface image and a predetermined route such that this mobile body runs on the route;
wherein the controller causes the scanner to intermittently generate the partial floor surface image with a predetermined interval.

2. The mobile body according to claim 1, wherein the interval is adjusted correspondingly to a speed of the mobile body.

3. The mobile body according to claim 1, wherein the interval is adjusted correspondingly to a turning angle of the mobile body.

4. A mobile body control system, comprising:
plural mobile bodies that run along routes in a predetermined area of a floor surface; and
a management server;
wherein the plural mobile bodies (a) scan floor surface parts at current positions of the mobile bodies and thereby generate partial floor surface images, respectively, and (b) transmit the partial floor surface images to the management server;
the management server comprises a communication device that receives the partial floor surface images from the plural mobile bodies, a mobile body position determining unit that determines the current positions of the mobile bodies on the basis of the partial floor surface images, and a mobile body control unit that controls operations of the mobile bodies on the basis of the determined current positions of the mobile bodies for the mobile bodies, respectively;
the plural mobile bodies intermittently generate the partial floor surface images with predetermined intervals, respectively; and
the mobile body control unit sets the intervals to the mobile bodies.

5. The mobile body control system according to claim 4, wherein the mobile body control unit sets the intervals and generating timings of the partial floor surface images to the mobile bodies such that the generating timings of the partial floor surface images become even among the plural mobile bodies.

6. The mobile body control system according to claim 4, wherein the mobile body control unit sets the interval to the mobile body correspondingly to a current position of this mobile body.
